# EUROPEAN PATENT APPLICATION

(11) **EP 4 549 990 A1**
(43) Date of publication of application: **07.05.2025**
(21) Application number: 23206791.8
(22) Date of filing: 30.10.2023
(51) Int. Cl.: G01S 7/28, G01S 7/292, G01S 7/35, G01S 13/931, G01S 13/72

(54) **MULTIPATH AND FALSE DETECTION MITIGATION**

(71) Applicant: GM Cruise Holdings LLC, San Francisco, CA 94107 (US)
(72) Inventor: SANSON, Jessica Bartholdy, 85521 Ottobrunn (DE); JÁCOME MUÑOZ, Jorge Julio, 85521 Ottobrunn (DE); GÜTLEIN-HOLZER, Johanna, 85521 Ottobrunn (DE); KABAKCHIEV, Kalin Hristov, 85521 Ottobrunn (DE); GIERE, Andre, 85521 Ottobrunn (DE); BRISKEN, Stefan Andreas, 85521 Ottobrunn (DE)
(74) Representative: Berkenbrink, Kai-Oliver

(57) **Abstract**

Various technologies described herein pertain to a radar sensor system that determines if a point detected by the radar corresponds to a true target and outputs an indication upon which control of an autonomous vehicle may be based. The radar can be used to determine if the point corresponds to a false target, thereby mitigating false positives. The radar can be used to determine if an object coincides with a location of the false target, thereby mitigating false negatives. The radar employs an algorithm that includes applying different windows to a return signal on a beamforming stage and comparing the resulting windowed signals.

## Description

### BACKGROUND

In the automotive sector, it is often desired for a vehicle to have an accurate and reliable sense of an environment around the vehicle. Radar sensor systems are generally considered to be a robust and cost-effective option for achieving this goal, even in adverse driving scenarios involving low lighting, strong lighting, or precipitation. In a radar sensor system, radio signals are transmitted into the environment where the signals reflect off of objects and return to the radar sensor system to be processed. In an ideal environment, a radio signal propagates directly to an object in a line-of-sight of the radar sensor system, reflects off the object, and returns to the radar sensor system along a direct path. However, environments around the vehicle frequently include multiple objects having reflective surfaces. Radio signals from the radar sensor system can reflect off of these objects and return to the radar sensor system along an indirect path in addition to or instead of the direct path discussed above. A phenomenon where radio signals return to the radar sensor system by two or more paths (i.e., a direct path and an indirect path, a first indirect path and a second indirect path, etc.) is commonly referred to as multipath.

When a radio signal returns to the radar sensor system along a direct path from a reflecting object, the radar sensor system detects that the object is located at a distance and an azimuth angle relative to the radar sensor system based on an amount of time required for the radio signal to return and a receive angle at which the radio signal was received by the radar sensor system. In this case, the radar sensor system has correctly detected a true target.

However, when a radio signal returns to the radar sensor system along an indirect path, the radar sensor system detects that an object exists at a distance from the radar based on a total distance that the radio signal traveled during its indirect path at an azimuth angle corresponding to the receive angle of the radio signal. In some cases, there is not actually an object at the distance and the azimuth angle indicated by the indirect return signal (i.e., the radar sensor system detects a false target). In these cases, the conventional radar sensor system has generated a false positive. For example, an indirect return signal can cause the radar sensor system to falsely detect an object that is a mirror image (i.e., a ghost target) of a real object, such as a car. In this example, another reflective surface in the environment of the radar sensor system, such as a guardrail, functions as a mirror that causes the radio signal to return along an indirect path that causes the radar to falsely detect the real object at a location beyond the mirror.

Some conventional radar sensor systems mitigate false positives caused by ghost targets by utilizing the observation that a track of a radar signal to a ghost target (i.e., a multipath track) is a mirrored version of a track to a true target (i.e., a true track), with respect to a reflective surface that reflected the radar signal. These conventional systems use conventional surface reflection approaches to estimate the reflection surface between all multipath pairs to classify an evaluated track as a multipath track based on correlation between the track and the true track. However, these conventional systems suffer from false negatives since a real object may be located in a possible place of reflection of other objects in the environment of the radar. For example, a real object may be coincidentally located at the same distance and the same azimuth angle of a ghost target that is indicated by an indirect return signal. Thus, some conventional radar sensor systems may mistakenly disregard a real object by assuming it is merely a ghost target, and thereby generating a false negative.

Furthermore, an indirect return signal can have a receive angle at which it is received by the radar sensor system that is different than a transmit angle at which a corresponding transmit signal was transmitted. The conventional surface reflection approaches require an angle of a detected target to correspond to the transmit angle and the receive angle. Therefore, these conventional surface reflection approaches cannot accurately and reliably determine whether a detected target is a real target or a false target in scenarios where the receive angle and transmit angle differ.

As discussed above, multipath is a source of false detections - false positives and false negatives - in conventional radar sensor systems, resulting in a degradation of radar accuracy and reliability. Multipath increases with radar resolution, therefore multipath and its associated impact on radar accuracy and reliability is particularly significant in high-resolution automotive radars. For example, an autonomous vehicle perceives objects surrounding the autonomous vehicle based upon sensor signals generated by sensor systems of the autonomous vehicle to enable navigating a driving environment. The autonomous vehicle may include various sensor systems, such as a radar sensor system, a camera sensor system and/or a lidar sensor system, for generating sensor signals. The autonomous vehicle also includes a centralized processing device that receives data based upon the sensor signals generated by the sensor systems and performs a variety of different tasks, such as detection of vehicles, pedestrians, and other objects. Based on an output of the processing device, the autonomous vehicle may perform a driving maneuver. Operation of the autonomous vehicle may be detrimentally impacted by inaccurate detections from the radar sensor system.

### SUMMARY

The following is a brief summary of subject matter that is described in greater detail herein. This summary is not intended to be limiting as to the scope of the claims.

Described herein are various technologies in which radar sensor systems determine if a detection point detected by a radar sensor system corresponds to a true target (e.g., a real object in an environment of the radar sensor system). A radar sensor system can be utilized to output an indication that the detection point corresponds to a true target, and control of an autonomous vehicle may be based on the indication. In contrast to conventional approaches that are prone to generating false positives, the radar sensor system described herein employs an algorithm that can determine if a detection point detected by the radar sensor system corresponds to a false target, thereby mitigating false positives. Furthermore, in contrast to conventional approaches that are prone to generating false negatives, the algorithm can determine if an object coincides with a location of the false target, thereby mitigating false negatives.

According to various embodiments, a radar sensor system can include a transmit antenna, a receive antenna, and radar processing circuitry, which can perform various acts. The transmit antenna can be configured to transmit a radar signal into an environment of the radar sensor system. Further, the receive antenna can be configured to receive a return signal from the environment of the radar sensor system responsive to the radar signal. The radar processing circuitry can generate a radar frame based on the return signal received from the environment. The radar frame can include one or more detection points, where each of the detection points can have an elevation angle, an azimuth angle, and a magnitude. The radar processing circuitry can apply a first window to the return signal on a beamforming stage to form a first windowed signal. The radar processing circuitry can apply a second window different from the first window to the return signal on the beamforming stage to form a second windowed signal.

The radar sensor system can include a first channel corresponding to a first transmit antenna and a first receive antenna and a second channel corresponding to a second transmit antenna and a second receive antenna. The radar processing circuitry can apply the first window and the second window such that the channels are integrated with different powers. The radar processing circuitry can apply the first window such that a first weight is applied to the first channel and a second weight is applied to the second channel. Further, the radar processing circuitry can apply the second window such that a third weight is applied to the first channel and a fourth weight is applied to the second channel. The radar processing circuitry can apply the weights such that at least one of the third weight is different from the first weight or the fourth weight is different from the second weight. Further, the radar processing circuitry can apply the weights such that the first weight and second weight are different or the same and such that the third weight and the fourth weight are different or the same.

Moreover, the radar processing circuitry can determine if the detection point corresponds to a true target or a false target based on a comparison of the first windowed signal and the second windowed signal. Furthermore, the radar processing circuitry can determine if the detection point corresponds to a true target or a false target based on a characteristic of the environment of the radar sensor system. The radar processing circuitry can generate an indication as to whether the detection point corresponds to a true target or a false target. The indication can be outputted by the radar sensor system, employed by the radar sensor system for additional processing of radar data, or the like.

According to various embodiments, an autonomous vehicle can include the radar sensor system that determines whether a detection point corresponds to a true target or a false target as described herein. A mechanical system of the autonomous vehicle can be controlled based on an indication output by the radar sensor system or output by a computing system of the autonomous vehicle as to whether the detection point corresponds to a true target or a false target. Pursuant to other embodiments, other types of vehicles other than an autonomous vehicle can include the radar sensor system described herein. In yet other embodiments, the radar sensor system can be a standalone device (e.g., separate from a vehicle).

The radar sensor system described herein can mitigate false positives and false negatives that may otherwise be generated by a radar sensor system. Moreover, the radar sensor system can determine whether a detection point corresponds to a true target or a false target based on a single radar frame and can provide high accuracy target determination.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

Fig. 1A illustrates an exemplary driving environment that includes an autonomous vehicle, an object, and a ghost target.
Fig. 1B illustrates an exemplary driving environment that includes an autonomous vehicle, an object, a second object, and a ghost target.
Fig. 2 illustrates a block diagram of an exemplary radar sensor system.
Fig. 3 illustrates exemplary range data plots of detection points based on a first windowed signal of a return signal received by the radar sensor system of Fig. 2.
Fig. 4 illustrates exemplary range data plots of detection points based on a second windowed signal of the return signal received by the radar sensor system of Fig. 2.
Fig. 5 illustrates a block diagram representing an exemplary algorithm.
Fig. 6 illustrates an autonomous vehicle according to various embodiments.
Fig. 7 is a flow diagram that illustrates an exemplary methodology of determining whether a detection point corresponds to a true target using a radar sensor system.
Fig. 8 illustrates an exemplary computing device.

### DETAILED DESCRIPTION

Various technologies pertaining to determining whether a detection point detected by an automotive radar sensor system corresponds to a true target are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean "serving as an illustration or example of something."

Examples set forth herein pertain to an autonomous vehicle including a radar sensor system that determines whether a detection point detected by an automotive radar sensor system corresponds to a true target. It is to be understood, however, that the radar sensor system described herein can be employed in a variety of different scenarios, such as flight, in drone technologies, in augmented reality (AR) or virtual reality (VR) technologies, in non-autonomous vehicles (e.g., in a fleet of non-autonomous vehicles), and so forth. Autonomous vehicles are set forth herein as one possible use case, and features of the claims are not to be limited to autonomous vehicles unless such claims explicitly recite an autonomous vehicle.

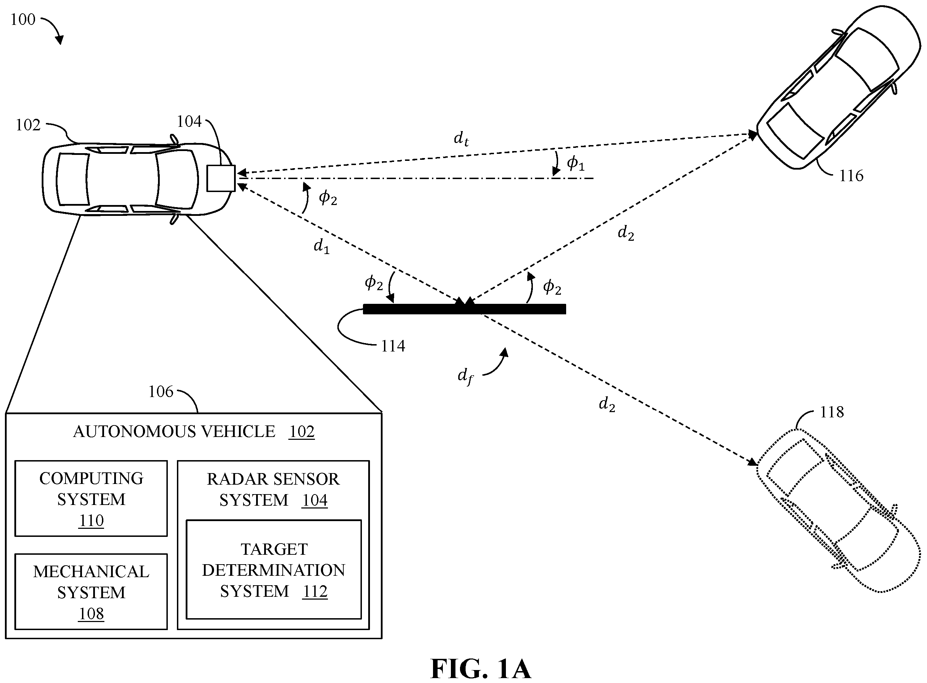

Referring now to the drawings, Fig. 1A illustrates an exemplary driving environment 100 that includes an autonomous vehicle 102. The autonomous vehicle 102 includes a radar sensor system 104 that determines whether a detection point detected by the radar sensor system 104 corresponds to a true target (e.g., a real object in an environment of the radar sensor system 104).

The environment 100 further includes an object 116 (e.g., a car 116). A first radar signal transmitted at a transmit angle of *ϕ*₁ by the radar sensor system 104 travels a distance of *dₜ* to the car 116, reflects off the car 116, and travels a distance of *dₜ* to the radar sensor system 104. The radar sensor system 104 receives a first return signal at a receive angle of *ϕ*₁, where the first return signal is responsive to the first radar signal. In this example, the first return signal returns to the radar sensor system 104 along a direct path, therefore, the radar sensor system 104 can detect that the car 116 is located at a distance of *dₜ* from the radar sensor system 104 and at an azimuth angle of *ϕ*₁ relative to an axis of the radar sensor system 104. Utilizing the techniques described herein, the radar sensor system 104 can determine that a detection point at the distance of *dₜ* from the radar sensor system 104 and at the azimuth angle of *ϕ*₁ (e.g., corresponding to the car 116) along the direct path is a true target. Thus, the radar sensor system 104 can generate an indication that such detection point corresponding to the car 116 corresponds to a true target. The indication can be outputted by the radar sensor system 104, employed by the radar sensor system 104 for additional processing of radar data, or the like.

The environment 100 further includes a reflecting surface 114 and a ghost target 118. A second radar signal transmitted at a second transmit angle of *ϕ*₂ by the radar sensor system 104 travels a distance of *d*₁ and reflects off the reflecting surface 114 at a reflection angle of *ϕ*₂. The second radar signal then travels a distance of *d*₂, reflects off the car 116, and travels a distance of *d*₂ to the reflecting surface 114. The second radar signal then reflects off the reflecting surface 114 at a reflection angle of *ϕ*₂ and travels a distance *d*₁ to the radar sensor system 104. The radar sensor system 104 receives a second return signal at a receive angle of *ϕ*₂, where the second return signal is responsive to the second radar signal. In this example, the second return signal returns to the radar sensor system 104 along an indirect path. Based on the second return signal, the radar sensor system 104 can utilize the techniques set forth herein to detect that the ghost target 118 is located at a distance *d_{f},* where *d_{f}* = *d₁* + *d*₂, and at an azimuth angle of *ϕ*₂ relative to the axis of the radar sensor system 104. Accordingly, the radar sensor system 104 can determine that the ghost target 118 is a false target. Thus, the radar sensor system 104 can generate an indication that a detection point corresponding to the ghost target 118 is a false target. The indication can be outputted by the radar sensor system 104, employed by the radar sensor system 104 for additional processing of radar data, or the like. Thus, the radar sensor system 104 can mitigate false positives and thereby yield an accurate and reliable sense of the environment 100 around the autonomous vehicle 102.

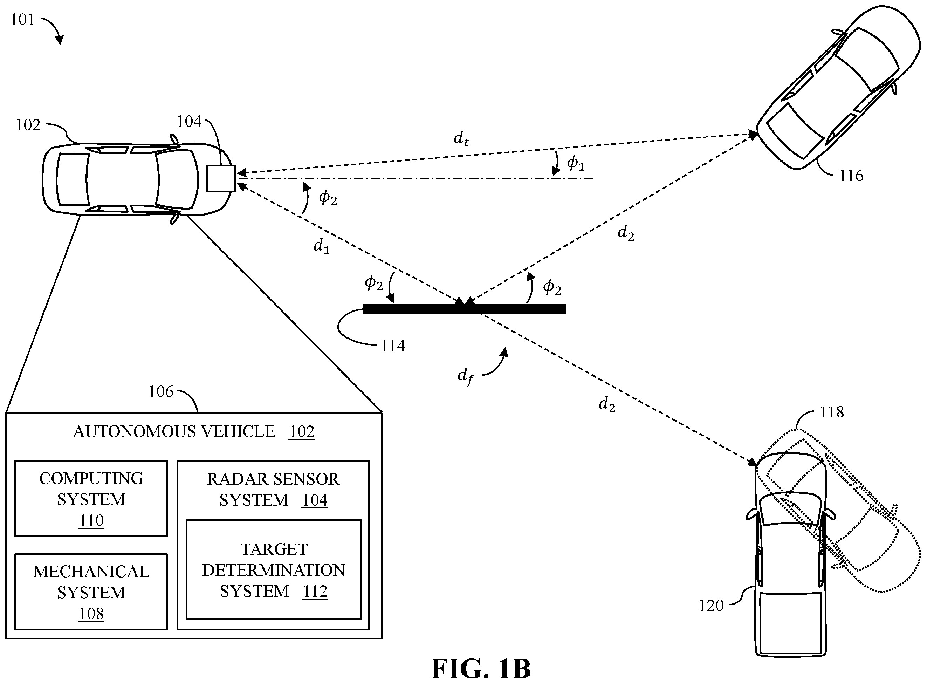

Fig. 1B illustrates an exemplary driving environment 101 that includes the autonomous vehicle 102 having the radar sensor system 104, the reflecting surface 114, the car 116, and the ghost target 118 of Fig. 1A. As described with regard to Fig. 1A, based on the second return signal, the radar sensor system 104 detects that the ghost target 118 is located at a distance *d_{f},* where *d_{f}* = *d₁* + *d*₂, and at an azimuth angle of *ϕ*₂ relative to the axis of the radar sensor system 104. However, environment 101 further includes a second object 120 (e.g., a truck 120) that is at least partially co-located with the ghost target 118. Accordingly, the radar sensor system 104 can determine that the truck 120 is a true target despite the truck 120 being at least partially co-located with the ghost target 118. In other words, the radar sensor system 104 can discern that a first detection point corresponding to the truck 120 is a true target and that a second detection point corresponding to the ghost target 118 is a false target despite the first detection point and the second detection point having similar range data (e.g., elevation angle, azimuth angle, magnitude, etc.) and/or Doppler data. The radar sensor system 104 can generate an indication that a detection point corresponding to the truck 120 corresponds to a true target. The indication can be outputted by the radar sensor system 104, employed by the radar sensor system 104 for additional processing of radar data, or the like. Thus, the radar sensor system 104 can mitigate false negatives and thereby yield an accurate and reliable sense of the environment 100 around the autonomous vehicle 102.

Moreover, the first radar signal transmitted at the first transmit angle of *ϕ*₁ by the radar sensor system 104 can travel a distance of *dₜ*, reflect off the car 116, and the reflecting surface 114. Thus, a third return signal can travel the distance of *dₜ* from the radar sensor system 104 to the car 116, reflect off of the car 116 and travel a distance of *d*₂ towards the reflecting surface 114, reflect off the reflecting surface 114 at a reflection angle of *ϕ*₂, and travel a distance of *d*₁ to the radar sensor system 104. The radar sensor system 104 receives the third return signal at a receive angle of *ϕ*₂. In this example, the third return signal returns to the radar sensor system 104 along an indirect path. Based on the third return signal, the radar sensor system 104 detects a target (not pictured) is located at a distance of (*d*₁ + *d*₂ + *dₜ*)/2. Since the transmit angle of *ϕ*₁ (e.g., of the first radar signal) is different from the receive angle of *ϕ*₂, an azimuth angle at which the radar sensor system 104 detects the target depends on characteristics of transmit antenna(s) and receive antenna(s) that may be employed by the radar sensor system 104. Accordingly, the azimuth angle at which the radar sensor system 104 detects the target can be different from the transmit angle and the receive angle. Therefore, the target indicated by the third return signal, which corresponds to a false target, cannot be filtered (i.e., determined to be a false target) by conventional radar sensor systems using conventional surface reflection approaches, since such conventional approaches require the azimuth angle of the detected target to correspond to a transmit angle and a receive angle indicative of the reflecting surface 114. Due to the multiple reflection characteristics, a uniformity of magnitude and/or phase of the third return signal between radar channels (i.e., pairs of transmit antennas and receive antennas) of the radar sensor system 104 is compromised. Therefore, an instability of magnitude and/or phase of the third return signal between the radar channels can be used by the radar sensor system 104 to determine if a detection point is a true target or a false target. For example, a first phase of the third return signal based on a first radar channel of the radar sensor system 104 can be compared by the radar sensor system 104 to a second phase of the third return signal based on a second radar channel of the radar sensor system 104. In this example, if the second phase varies from the first phase, the radar sensor system 104 can determine that the target indicated by the third return signal corresponds to a false target. Alternatively, if the first phase and the second phase are substantially similar, the radar sensor system 104 can determine that the target is a true target. Accordingly, the radar sensor system 104 can classify targets that are not detected at an angle corresponding to a reflecting surface in the environment 100, 101 of the autonomous vehicle. Thus, the radar sensor system 104 can mitigate false positives and false positives, thereby yielding an accurate and reliable sense of the environment 100, 101 around the autonomous vehicle 102.

Further, the second radar signal transmitted at the second transmit angle of *ϕ*₂ by the radar sensor system 104 can travels a distance of *d*₁, reflect off the reflecting surface 114 at a reflection angle of *ϕ*₂, and reflect off the car 116. Thus, a fourth return signal can travel a distance of *d*₁, reflect off the reflecting surface 114 at the reflection angle of *ϕ*₂, then travel a distance of *d*₂, reflect off the car 116, and travel a distance of *dₜ* to the radar sensor system 104. The radar sensor system 104 receives the fourth return signal at a receive angle of *ϕ*₁. In this example, the fourth return signal returns to the radar sensor system 104 along an indirect path. Based on the fourth return signal, the radar sensor system 104 detects a target (not pictured) is located at a distance of (*d*₁ + *d*₂ + *dₜ*)/2*.* Since the transmit angle of *ϕ*₂ is different from the receive angle of *ϕ*₁, an azimuth angle at which the radar sensor system 104 detects the target depends on characteristics of transmit antenna(s) and receive antenna(s) that may be employed by the radar sensor system 104. Accordingly, the azimuth angle at which the radar sensor system 104 detects the target can be different from the transmit angle and the receive angle. Therefore, the target indicated by the fourth return signal, which corresponds to a false target, cannot be filtered (i.e., determined to be a false target) by conventional radar sensor systems using conventional surface reflection approaches, since such conventional approaches require the azimuth angle of the detected target to correspond to a transmit angle and a receive angle indicative of the reflecting surface 114. As described herein, an instability of magnitude and/or phase of the fourth return signal between the radar channels can be used by the radar sensor system 104 to determine if a detection point is a true target or a false target. For example, a first magnitude of the fourth return signal based on the first radar channel of the radar sensor system 104 can be compared by the radar sensor system 104 to a second magnitude of the fourth return signal based on the second radar channel of the radar sensor system 104. In this example, if the second magnitude varies from the first magnitude, the radar sensor system 104 can determine that the target indicated by the fourth return signal corresponds to a false target. Alternatively, if the first phase and the second phase are substantially similar, the radar sensor system 104 can determine that the target is a true target. Accordingly, the radar sensor system 104 can classify targets that are not detected at an angle corresponding to a reflecting surface in the environment 100, 101 of the autonomous vehicle. Thus, the radar sensor system 104 can mitigate false positives and false positives, thereby yielding an accurate and reliable sense of the environment 100 around the autonomous vehicle 102.

The autonomous vehicle 102 includes componentry depicted in callout 106. Thus, the autonomous vehicle 102 includes the radar sensor system 104, a mechanical system 108 (e.g., a vehicle propulsion system, a braking system, a steering system, a combination thereof, etc.), and a computing system 110. The radar sensor system 104 can be a multi-input multi-output (MIMO) radar sensor system having multiple pairs of transmit antennas and receive antennas, the multiple pairs forming multiple radar channels of the MIMO radar sensor system 104. The radar sensor system 104 can have the target determination system 112 incorporated therein. The target determination system 112 can determine whether a detection point detected by the radar sensor system 104 corresponds to a true target or a false target. The radar sensor system 104 can be in communication with the computing system 110 of the autonomous vehicle 102. The mechanical system 108 can be controlled (e.g., by the computing system 110) based upon an indication from the target determination system 112 that the detection point corresponds to a true target or a false target.

While the autonomous vehicle 102 is shown as including one radar sensor system 104, it is contemplated that the autonomous vehicle 102 can include a plurality of radar sensor systems similar to the radar sensor system 104. In such an embodiment, each of the radar sensor systems may include a single channel, and channels of the disparate radar sensor systems may be analyzed to determine whether a target is a true target. The plurality of radar sensor systems can be located around the autonomous vehicle 102 and can have different fields of view relative to the autonomous vehicle 102 covering different portions of the driving environment 100 surrounding the autonomous vehicle 102. Each of the radar sensor systems of the autonomous vehicle 102 can be independently controlled by a radar control system incorporated in the computing system 110. Further, it is contemplated that each of the radar sensor systems (or a subset thereof) can determine whether a detection point corresponds to a true target or a false target.

The target determination system 112 can be employed to apply in a beamforming stage a first window to a return signal received by the radar sensor system 104 to form a first windowed signal and to apply in the beamforming stage a second window to the return signal to form a second windowed signal. The second window can be different from the first window. The target determination system 112 can apply a window to the return signal by multiplying the return signal by a window function (i.e., an apodization function, a tapering function). The window can comprise a non-negative curve window, a bell-shaped curve window, a rectangular window, a triangular window, a polynomial window, or the like. The window function can comprise a Hann function, a Hamming function, a Dolph-Chebyshev function, a Taylor function, or the like. Applying a first window to the return signal can include applying a first weight to the return signal, for example, such that a first portion of the return signal is weighted differently than another portion of the return signal. Applying a second window to the return signal can include applying a second weight different from the first weight to the return signal, for example, such that a second portion of the return signal is weighted differently than the first portion of the return signal. Furthermore, a plurality of first weights can be applied to the return signal, for example, such that a first plurality of portions of the return signal have differing weights. Similarly, a plurality of second weights different from the plurality of first weights can be applied to the return signal, for example, such that a second plurality of portions of the return signal have differing weights. The second window can be determined based on the first window and/or first windowed signal. For example, based on the first windowed signal, the radar sensor system 104 may determine that a target is at an angle relative to the radar sensor system 104. Accordingly, the target determination system 112 can be employed to generate the second window such that the second window focuses on an angular range of the environment that comprises the angle of the target. For example, when generating the second window, the target determination system 112 may apply a higher weight to a portion of the return signal corresponding to the angular range and/or apply a lower weight to a portion of the return signal.

In embodiments where the radar sensor system 104 includes a plurality of channels, each of the channels corresponding to a transmit antenna and a receive antenna, the target determination system 112 can apply a first window and a second window in the beamforming stage such that the channels are integrated with different powers. For example, the radar sensor system 104 can include a first channel corresponding to a first transmit antenna and a first receive antenna and a second channel corresponding to a second transmit antenna and a second receive antenna. The target determination system 112 can apply the first window such that a first weight is applied to the first channel and a second weight is applied to the second channel. Further, the target determination system 112 can apply the second window such that a third weight is applied to the first channel and a fourth weight is applied to the second channel. The target determination system 112 can apply the weights such that at least one of the third is different from the first weight or the fourth weight is different from the second weight. Further, the target determination system 112 can apply the weights such that the first weight and second weight are different or the same and such that the third weight and the fourth weight are different or the same. As described herein, the second window can be determined based on the first window or a first windowed signal generated therefrom. For example, based on the first windowed signal, the radar sensor system 104 may determine that a target is at an angle relative to the radar sensor system 104. The radar sensor system 104 can determine that the first channel corresponds to an angular range of the environment that includes the angle of the target. Accordingly, the target determination system 112 can be employed to generate the second window such that the third weight applied to the first channel is greater than the fourth weight applied to the fourth channel. In an exemplary first window, the first weight applied to the first channel can be equal to 1, and the second weight applied to the second channel can be equal to 2. After the radar sensor system 104 determines that the first channel corresponds to an angular range of the environment that includes the angle of the target, the target determination system 112 can be employed to apply a second window such that the third weight applied to the first channel is equal to 3 and the fourth weight applied to the second channel is equal to 0.5.

Applying the window function may assist the radar sensor system 104 in beamforming, or spatially filtering the return signal to enhance a portion of the return signal from a desired direction (e.g., an angular range encompassing an object in an environment of the radar sensor system 104) and/or to suppress noise and interfering signals from other directions. The window function may be used to zero-value the return signal outside of a selected interval, such as an angular range of the radar sensor system 104 that includes an object. A segment of the return signal can be isolated by the target determination system 112 before applying the window function.

The target determination system 112 can be employed to compare the return signal (i.e., an unwindowed signal, an unfiltered signal, an unweighted signal, etc.) to a windowed signal. Further, the target determination system 112 can determine if a detection point indicated by the return signal corresponds to a true target or a false target based on the comparison of the return signal and the windowed signal. Moreover, the target determination system 112 can be employed to compare a first windowed signal to a second windowed signal. For example, a first phase and/or magnitude of the first windowed signal may be compared to a second phase and/or magnitude of the second windowed signal. Further, the target determination system 112 can determine if a detection point indicated by the return signal corresponds to a true target or a false target based on the comparison of the first windowed signal to the second windowed signal. Accordingly, in comparison to conventional target classification approaches that are prone to falsely detecting the ghost target 118 as a true target, the target determination system 112 employs an algorithm that enables accurate classification of false targets such as ghost target 118. Thus, a target determination outputted by the target determination system 112 gives the autonomous vehicle 102 a more accurate and reliable sense of its environment 100 compared to conventional approaches.

The target determination system 112 can be employed to generate a metric based on a return signal or a windowed signal. The metric can include an elevation angle of a detection point, an azimuth angle of a detection point, a magnitude of a detection point, or any combination thereof, where the elevation angle, the azimuth angle, and the magnitude are based on the return signal or the windowed signal. Accordingly, the target determination system 112 can be employed to compare a metric of the return signal to a metric of a windowed signal. Further, the target determination system 112 can determine if a detection point indicated by the return signal corresponds to a true target or a false target based on the comparison of the metric of the return signal and the metric of the windowed signal. Moreover, the target determination system 112 can be employed to compare a first metric of a first windowed signal to a second metric of a second windowed signal. Further, the target determination system 112 can determine if a detection point indicated by the return signal corresponds to a true target or a false target based on the comparison of the first metric and the second metric. For example, the target determination system 112 can generate a score based on the comparison of the first metric and the second metric. The target determination system 112 can compare the score to a threshold. If the target determination system 112 determines that the score is less than the threshold, the target determination system 112 can indicate that the detection point is a false target. Alternatively, if the target determination system 112 determines that the score is greater than or equal to the threshold, the target determination system 112 can indicate that the detection point is a true target.

A metric generated by the target determination system 112 can comprise a plurality of parameters (e.g., parameters corresponding to information from a single radar frame, information corresponding to performance of beamforming by the radar sensor system 104, information corresponding to an environment of the radar sensor system 104, or any combination thereof). Each of these parameters may be weighted equally, differently, or any combination thereof. Weights of the parameters can be optimized according to a desired objective, such as filtering out more false negatives or better avoiding false negatives. For example, a comparison of a first azimuth angle of a detection point based on a first windowed signal and a second azimuth angle of the detection point based on a second windowed signal may be more strongly indicative of whether the detection point corresponds to a true target or a false target than a comparison of elevation angles. In such an example, a parameter corresponding to azimuth angle may be weighted more heavily than a parameter corresponding to elevation angle.

The target determination system 112 can determine whether a detection point corresponds to a true target based on information from a single radar frame, information corresponding to performance of beamforming by the radar sensor system 104, information corresponding to an environment of the radar sensor system 104, or any combination thereof. The radar sensor system 104 can be a high-performance radar sensor system (e.g., the radar sensor system 104 can provide high density points and high angle and Doppler resolution).

The target determination system 112 can determine whether a detection point corresponds to a true target based on information from a single radar frame comprising the detection point. For example, detection points having Doppler data (e.g., velocity values, radial velocity values, etc.), range data (e.g., azimuth angle values, elevation angle values, magnitudes, or a combination thereof) or a combination thereof from a single radar frame collected by the radar sensor system 104 can be used by the target determination system 112 to determine whether one or more of the detection points corresponds to a true target or a false target. In other words, the radar sensor system 104 can generate range data, Doppler data, or any combination thereof based on the return signal. Accordingly, the target determination system 112 can determine if a detection point corresponds to a true target based on the range data, the Doppler data, or any combination thereof.

The target determination system 112 can generate the target determination of the radar sensor system 104 based on performance of beamforming by the radar sensor system 104. For example, a stability of an angle, a phase, a magnitude, or a combination thereof collected by the radar sensor system 104 can be used by the target determination system 112 to determine whether one or more detection points correspond to a true target. The angle may be an angle at which a return signal is received by the radar sensor system 104 relative to a transmit angle of a radar signal, an azimuth angle corresponding to a detection point, an elevation angle corresponding to a detection point, or the like. In embodiments, the radar sensor system 104 performs beamforming processes on the return signal, and the stability of the angle, the magnitude, or a combination thereof is evaluated across results of the beamforming processes.

In embodiments of the radar sensor system 104 having a plurality of channels, the stability of angles, phases, or magnitudes of return signals corresponding to detection points of an evaluated object can be analyzed across the channels. For example, the radar sensor system 104 can have a first channel and a second channel. Based on a first return signal corresponding to the first channel, the radar sensor system 104 can detect a first detection point at a first azimuth angle, where the first detection point corresponds to an evaluated object. Based on a second return signal corresponding to the second channel, the radar sensor system 104 can detect a second detection point at a second azimuth angle, where the second detection point also corresponds to the evaluated object. A first metric generated by the target determination system 112 can include a first stability of the first azimuth angle relative to the second azimuth angle. In other words, the first metric can be generated by comparing the first azimuth angle relative to the second azimuth angle. Similarly, a second metric generated by the target determination system 112 can include a second stability of a third azimuth angle of the first detection point relative to a fourth azimuth angle of the second detection point. The process described herein can be repeated such that the stability of magnitudes or angles for all detection points corresponding to an evaluated object is analyzed. Moreover, multiple channels may detect the same detection point (i.e., the first detection point and the second detection point may be the same detection point).

The target determination system 112 can generate the target determination based on information corresponding to an environment of the radar sensor system 104. For example, the information may indicate the location of an object in the environment. The object may be a static object and its location may be stored in map data. Further, the map data may indicate that the object comprises a reflective surface (i.e., a surface capable of reflecting a radar signal). Furthermore, the map data may include characteristics of the reflective surface such as geometry, orientation, reflectivity, and the like. Accordingly, the location and/or a characteristic of the reflective surface may be stored in map data. The map data may be stored in a memory of the computing system 110 of the autonomous vehicle 102. The computing system 110 can analyze the reflecting surface, for example, to determine if the reflecting surface could have generated a return signal received by the radar sensor system 104 (i.e., if an indirect return signal reflected off the reflecting surface).

In embodiments, the autonomous vehicle 102 can include a camera sensor system that generates an image signal that includes an object having a reflecting surface in the environment of the radar sensor system 104. The image signal can be provided to the computing system 110, wherein the reflecting surface can be analyzed, for example, to determine if the reflecting surface could have generated a return signal received by the radar sensor system 104.

The target determination system 112 can generate the target determination of the radar sensor system 104 based on detection points in a radar frame corresponding to moving object(s) in the driving environment 100 or 101. The radar sensor system 104, the computing system 110, or a combination thereof can determine a relative velocity of a detection point relative to the radar sensor system 104, generate an ego motion estimation of the radar sensor system 104, and normalize the relative velocity value of the detection point to the ego motion estimation to form an absolute velocity value of the detection point. The ego motion estimation may be generated based on data from the radar sensor system 104, the computing system 110, a GPS system of the autonomous vehicle 102, etc. The absolute velocity value may be provided to the target determination system 112. Accordingly, the target determination system 112 can identify detection points that have absolute velocity values of zero or approximately zero and thereby likely correspond to static object(s) in the driving environment 100, 101, such as guardrails, signs, tunnel walls, trees, buildings, and the like. Thus, detection points corresponding to static object(s) in the driving environment 100, 101 can be excluded from the target determination system 112 when generating the target determination.

Moreover, the target determination system 112 can identify detection points that have non-zero absolute velocity values and thereby likely correspond to moving object(s) in the driving environment 100, 101, such as other vehicles, pedestrians, or the like. Thus, detection points corresponding to moving object(s) in the driving environment 100, 101 can be evaluated by the target determination system 112 when generating the target determination. Further, the determination as to whether a detection point corresponds to a true target may be based on the absolute velocity of the detection point. For example, an absolute velocity of a detection point based on a return signal, a first absolute velocity of the detection point based on a first windowed signal of the return signal, a second absolute velocity of the detection based on a second windowed signal of the return, or a combination thereof may be compared. In this example, the comparison of the absolute velocities may be a basis for the target determination performed by the target determination system 112. For example, if the first absolute velocity and the second absolute velocity have substantially similar or equivalent values, the target determination system 112 may determine that the detection point more likely corresponds to a true target. Alternatively, if the first absolute velocity and the second absolute velocity vary significantly from each other, the target determination system 112 may determine that the detection point more likely corresponds to a false target.

In embodiments wherein the radar frame includes a plurality of detection points, the radar sensor system 104, the target determination system 112, the computing system 110, or a combination thereof can cluster a portion of the detection points to form a cluster of detection points that correspond to or form an evaluated object in the environment of the radar sensor system 104. The target determination system 112 can be employed to generate a metric based on a return signal or a windowed signal. The metric can include a quantity of the detection points corresponding to the evaluated object; a size of the evaluated object (e.g., an area within a perimeter corresponding to outermost detection points in the cluster of detection points); a density of the detection points corresponding to the evaluated object (e.g., the quantity of the detection points corresponding to the evaluated object relative to the size of the evaluated object); a geometry of the evaluated object (e.g., a shape formed by the perimeter of the cluster of detection points); a stability of an angle (e.g., an azimuth angle relative to the radar sensor system 104) of the evaluated object based on the first windowed signal relative to an angle of the evaluated object based on the second windowed signal; a stability of an amplitude of a portion of the first windowed signal corresponding to the evaluated object relative to an amplitude of a portion of the second windowed signal corresponding to the evaluated object; or a combination thereof.

For example, an evaluated object having a larger size (e.g., corresponding to a size of a vehicle), an evaluated object having a higher number of detection points, or an evaluated object having a higher density of corresponding detection points may be a basis for the target determination system 112 to determine that the evaluated object corresponds to a true target (i.e., the evaluated object includes a detection point corresponding to a true target). Further, in an example where the geometry of the evaluated object corresponds to a moving object typical of the environment 100, 101 (e.g., a car, a pedestrian, etc.), the target determination system 112 may determine that the evaluated object corresponds to a true target. Furthermore, in an example where the angle of the evaluated object based on the first windowed signal is substantially stable (i.e., constant) relative to the angle of the evaluated object based on the second windowed signal, the target determination system 112 may determine that the evaluated object corresponds to a true target. However, if the angles vary significantly or otherwise fail to be substantially stable, the target determination system 112 may determine that the evaluated object corresponds to a false target. Furthermore, in an example where the amplitude of the portion of the first windowed signal is substantially stable (i.e., constant) relative to the amplitude of the portion of the second windowed signal, the target determination system 112 may determine that the evaluated object corresponds to a true target. However, if the amplitudes vary significantly or otherwise fail to be substantially stable, the target determination system 112 may determine that the evaluated object corresponds to a false target.

Moreover, the radar sensor system 104, the target determination system 112, the computing system 110, or a combination thereof can cluster a second portion of the detection points to form a second cluster of detection points that correspond to or form a second evaluated object in the environment of the radar sensor system 104. Accordingly, the target determination system 112 can determine if a detection point corresponds to a true target based on a comparison of a first angle, a first Doppler, or a combination thereof corresponding to the first evaluated object and a second angle, a second Doppler, or a combination thereof corresponding to the second evaluated object. Furthermore, the target determination system 112 can generate the target determination based on a quantity of evaluated objects having substantially similar angles, Dopplers, or a combination thereof. For example, if two detected objects have similar range data (e.g., similar azimuth angles, elevation angles, and/or magnitudes), the target determination system 112 may determine that at least one of the detected objects corresponds to a true target.

The target determination system 112 can be employed to generate a metric based on a detection point, an evaluated object, or a combination thereof based on a return signal or a windowed signal. The metric can include an elevation angle, an azimuth angle, a magnitude, or a combination thereof, where the elevation angle, the azimuth angle, and the magnitude correspond to the detection point, the evaluated object, or a combination thereof based on the return signal or the windowed signal.

As described herein, the target determination system 112 can provide high accuracy target determination. Further, a single radar sensor system 104 implements the approaches described herein; thus, the target determination can be generated by the single radar sensor system 104. However, in various embodiments, it is contemplated that more than one radar sensor system of the autonomous vehicle 102 can each generate a corresponding target determination of an object that is real (e.g., car 116, truck 120, etc.) or that is perceived by a radar sensor system (e.g., a ghost target 118) in an environment (e.g., environment 100 or 101) of the autonomous vehicle 104.

The techniques employed by the target determination system 112 can be applicable regardless of modulation of the radar sensor system 104. For instance, the radar sensor system 104 can be a frequency modulated continuous wave (FMCW) radar sensor system or an orthogonal frequency division multiplexing (OFDM) radar sensor system; however, it is to be appreciated that other modulation schemes employed by the radar sensor system 104 are intended to fall within the scope of the hereto appended claims.

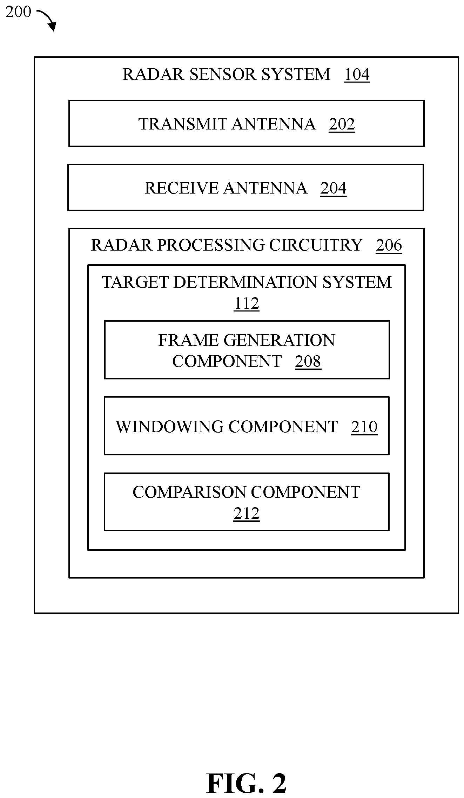

Fig. 2 illustrates the radar sensor system 104 according to various embodiments. The radar sensor system 104 includes at least one transmit antenna 202, at least one receive antenna 204, and radar processing circuitry 206, where the radar processing circuitry 206 is configured to perform various acts. The radar processing circuitry 206, for instance, can include a processor and memory, where the memory includes computer-executable instructions that are executed by the processor. Pursuant to various examples, the processor can be or include a graphics processing unit (GPU), a plurality of GPUs, a central processing unit (CPU), a plurality of CPUs, an application-specific integrated circuit (ASIC), a digital signal processor (DSP), a microcontroller, a programmable logic controller (PLC), a field programmable gate array (FPGA), or the like. Moreover, the radar processing circuitry 206 can include the target determination system 112.

The transmit antenna 202 is configured to transmit a radar signal into an environment of the radar sensor system 104. As described herein, the radar signal can be an FMCW radar signal, an OFDM radar signal, or substantially any other type of radar signal. The radar signal can impinge upon object(s) in the environment such that a portion of the radar signal returns to the radar sensor system 104. The receive antenna 204 is configured to receive a return signal from the environment of the radar sensor system 104 responsive to the radar signal. The radar processing circuitry 206 can process the return signal received from the environment to detect object(s) in the environment. For instance, based on the return signal received from the environment, the radar processing circuitry 206 can provide a radar frame that includes one or more detection points. A detection point can include a velocity value, an azimuth angle value, an elevation angle value, a magnitude, a combination thereof, and so forth.

The radar processing circuitry 206 can determine whether a detection point detected by the radar sensor system 104 corresponds to a true target or a false target. The radar processing circuitry 206 can be employed to apply a first window to a return signal received by the radar sensor system 104 to form a first windowed signal and to apply a second window to the return signal to form a second windowed signal. The radar processing circuitry 206 can be employed to compare the return signal (i.e., an unwindowed signal, an unfiltered signal, an unweighted signal, etc.) to a windowed signal. Further, the radar processing circuitry 206 can determine if a detection point indicated by the return signal corresponds to a true target or a false target based on the comparison of the return signal and the windowed signal. Moreover, the radar processing circuitry 206 can be employed to compare a first windowed signal to a second windowed signal. Further, the radar processing circuitry 206 can determine if a detection point indicated by the return signal corresponds to a true target or a false target based on the comparison of the first windowed signal to the second windowed signal.

The radar processing circuitry 206 can be employed to generate a metric based on a return signal or a windowed signal. Accordingly, the radar processing circuitry 206 can be employed to compare a metric of the return signal to a metric of a windowed signal. Further, the radar processing circuitry 206 can determine if a detection point indicated by the return signal corresponds to a true target or a false target based on the comparison of the metric of the return signal and the metric of the windowed signal. Moreover, the radar processing circuitry 206 can be employed to compare a first metric of a first windowed signal to a second metric of a second windowed signal. Further, the radar processing circuitry 206 can determine if a detection point indicated by the return signal corresponds to a true target or a false target based on the comparison of the first metric and the second metric.

The radar processing circuitry 206 can determine whether a detection point corresponds to a true target based on information from a single radar frame, information corresponding to performance of beamforming by the radar sensor system 104, information corresponding to an environment of the radar sensor system 104, or any combination thereof. For example, detection points having Doppler data (e.g., velocity values), range data (e.g., azimuth angle values, elevation angle values, magnitudes, or a combination thereof) or a combination thereof from a single radar frame collected by the radar sensor system 104 can be used by the radar processing circuitry 206 to determine whether one or more of the detection points corresponds to a true target or a false target. Accordingly, radar processing circuitry 206 can determine if a detection point corresponds to a true target based on the range data, the Doppler data, or any combination thereof.

The radar processing circuitry 206 can generate the target determination of the radar sensor system 104 based on detection points in a radar frame corresponding to moving object(s) in an environment of the radar sensor system 104. As described herein, the radar sensor system 104 can generate an absolute velocity value of a detection point. The absolute velocity value may be provided to the radar processing circuitry 206. Accordingly, the radar processing circuitry 206 can identify detection points that have absolute velocity values of zero or approximately zero and thereby likely correspond to static object(s) in the environment. Thus, detection points corresponding to static object(s) in the environment can be excluded from the radar processing circuitry 206 when classifying a detection point as a true target or as a false target.

Moreover, the radar processing circuitry 206 can identify detection points that have non-zero absolute velocity values and thereby likely correspond to moving object(s) in the environment. Thus, detection points corresponding to moving object(s) in the environment can be evaluated by the radar processing circuitry 206 when generating the target determination. Further, the determination as to whether a detection point corresponds to a true target may be based on the absolute velocity of the detection point.

The target determination system 112 can include a frame generation component 208, a windowing component 210, and a comparison component 212. The frame generation component 208 can generate a radar frame based on the return signal received from the environment. The radar frame includes one or more detection points. Each of the detection points can have an elevation angle and an azimuth angle value. Moreover, each of the detection points can have a velocity value.

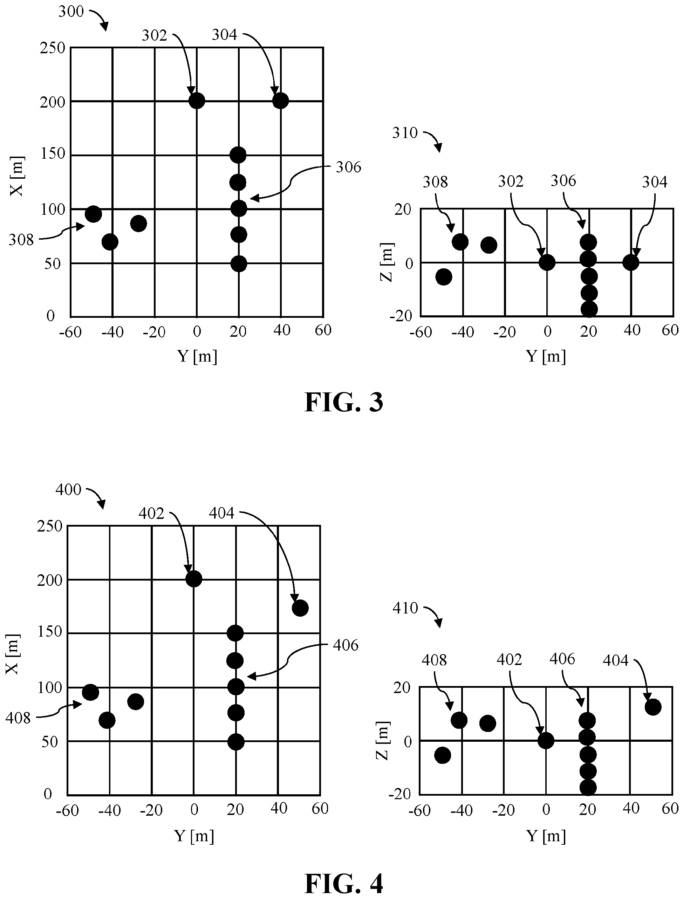

The windowing component 210 can apply a window to the return signal to form a windowed signal. According to an example, the windowing component 210 can generate an X-Y range plot 300 and a Y-Z range plot 310, as shown in Fig. 3, where the X-Y range plot 300 and the Y-Z range plot 310 represent range data of the detection points based on the windowed signal. By way of example, the plots 300, 310 include a first detection point 302, a second detection point 304, a first cluster of detection points 306, and a second cluster of detection points 308. Each detection point 302, 304 and each detection point of the clusters 306, 308 have an X-coordinate, Y-coordinate, and Z-coordinate relative to the radar sensor system 104, which is located at the origin of each of the plots 300, 310. An X-Y pair comprising the X-coordinate and the Y-coordinate of a detection point corresponds to an azimuth angle of the detection point relative to the radar sensor system 104. A Y-Z pair comprising the Y-coordinate and the Z-coordinate of a detection point corresponds to an elevation angle relative to the radar sensor system 104. Furthermore, an X-dimension distance, a Y-dimension distance, a Z-dimension distance, or a total distance from a detection point to the radar sensor system 104 may correspond to a magnitude or a range of the detection point relative to the radar sensor system 104.

Furthermore, the windowing component 210 can apply a second window to the return signal to form a second windowed signal. According to an example, the windowing component 210 can generate a second X-Y range plot 400 and a second Y-Z range plot 410, as shown in Fig. 4, where the X-Y range plot 400 and the Y-Z range plot 410 represent range data of the detection points based on the second windowed signal. By way of example, the plots 400, 410 include a first detection point 402, a second detection point 404, a first cluster of detection points 406, and a second cluster of detection points 408. Each detection point 402, 404 and each detection point of the clusters 406, 408 have an X-coordinate, Y-coordinate, and Z-coordinate relative to the radar sensor system 104, which is located at the origin of each of the plots 400, 410.

The comparison component 212 can compare a return signal and a windowed signal. Furthermore, the comparison component 212 can compare a first windowed signal, such as the windowed signal corresponding to Fig. 3, and a second windowed signal, such as the second windowed signal corresponding to Fig. 4. For example, a comparison of the first windowed signal and the second windowed signal may be based on a comparison of X-Y plot 300 and X-Y plot 400; a comparison of Y-Z plot 310 and Y-Z plot 410; or a combination thereof. The comparison of X-Y plot 300 and X-Y plot 400 can include a comparison of an azimuth angle and/or a magnitude of a detection point.

For example, a first azimuth angle of first detection point 302 in X-Y plot 300 may be compared to a second azimuth angle of first detection point 402 in X-Y plot 400. In this example, the first azimuth angle and the second azimuth angle are substantially similar (i.e., stable relative to each other), therefore, the target determination system 112 may determine that the detection point represented by points 302, 402 corresponds to a true target. Similarly, the target determination system 112 may determine that the detection point represented by points 302, 402 corresponds to a true target based on similarity between a first elevation angle of first point 302 in Y-Z plot 310 and a second elevation angle of first point 402 in Y-Z plot 410. Furthermore, the target determination system 212 may determine that the detection point represented by points 302, 402 corresponds to a true target based on similarity between a first magnitude of first point 302 in either or both of plots 300, 310 and a second magnitude of first point 402 in either or both of plots 400, 410.

In an example, a first azimuth angle of second detection point 304 in X-Y plot 300 may be compared to a second azimuth angle of second detection point 404 in X-Y plot 400. In this example, the first azimuth angle and the second azimuth angle are not substantially similar (i.e., unstable relative to each other), therefore, the target determination system 212 may determine that the detection point represented by points 304, 404 corresponds to a false target. Similarly, the target determination system 112 may determine that the detection point represented by points 304, 404 corresponds to a false target based on instability between a first elevation angle of second point 304 in Y-Z plot 310 and a second elevation angle of second point 404 in Y-Z plot 410. Furthermore, the target determination system 212 may determine that the detection point represented by points 304, 404 corresponds to a false target based on instability between a first magnitude of second point 304 in either or both of plots 300, 310 and a second magnitude of second point 404 in either or both of plots 400, 410.

Furthermore, the target determination system 112, can cluster points in the plots 300, 310, 400, 410 to form a cluster of detection points. For example, a portion of spatially proximal points in X-Y plot 300 and Y-Z plot 310 are clustered into cluster 308, and a portion of spatially proximal points in X-Y plot 400 and Y-Z plot 410 are clustered into cluster 408. In this example, cluster 308 and cluster 408 correspond to an evaluated object in the environment of the radar sensor system 104.

A metric generated by the target determination system 112 can include a quantity of the detection points corresponding to the evaluated object (e.g., a quantity of points in cluster 308 and/or cluster 408); a size of the evaluated object (e.g., an area within a perimeter formed by outermost points of cluster 308 and/or cluster 408); a density of the detection points corresponding to the evaluated object (e.g., the quantity of points in clusters 308 and/or 408 relative to the area within the perimeter formed by outermost points of cluster 308 and/or 408); a geometry of the evaluated object; a stability of an angle of the evaluated object based on the first windowed signal (e.g., an average azimuth angle of the points in cluster 308) relative to an angle of the evaluated object based on the second windowed signal (e.g., an average azimuth angle of the points in cluster 308); a stability of an amplitude of a portion of the first windowed signal corresponding to the evaluated object (e.g., the amplitude represented by an average magnitude of the points in cluster 308) relative to an amplitude of a portion of the second windowed signal corresponding to the evaluated object (e.g., the amplitude represented by an average magnitude of the points in cluster 408); or a combination thereof. As shown in Fig. 3 and Fig. 4, the angles and magnitudes of cluster 308 and cluster 408 are substantially stable, therefore the target determination system 112 may determine that the evaluated object corresponding to cluster 308 and cluster 408 is a true target.

As discussed herein, the target determination system 112 can generate the target determination based on information corresponding to an environment of the radar sensor system 104. For example, the information may indicate the location of an object in an environment of the radar sensor system 104. The object may be a static object and its location may be stored in map data. Further, the map data may indicate that the object comprises a reflective surface (i.e., a surface capable of reflecting a radar signal). Accordingly the location and/or a characteristic of the reflective surface may be stored in map data stored in a memory of the computing system 110 of Figs. 1A, 1B.

Turning to Fig. 3 and Fig. 4, the target determination system 112 can cluster points of X-Y plot 300 and Y-Z plot 310 into cluster 306 and can cluster points of X-Y plot 400 and Y-Z plot 410 into cluster 406. By way of example, the computing system 110 of Figs. 1A, 1B can determine a location of a detected object based on range data of cluster 306 and cluster 406 relative to a location of the radar sensor system 104. The computing system 110 can compare the location of the detected object to the map data. For example, the computing system 110 may determine that the location of the detected object corresponds with a location of a static object stored in the map data. The computing system 110 may perform a reflection analysis to determine if a reflecting surface of the static object could have generated a return signal received by the radar sensor system 104 where the return signal corresponds to the clusters 306 and 406. Furthermore, the computing system 110 may perform a reflection analysis to determine if the clusters 306 and 406 correspond to a reflecting surface capable of generating detection points 304 and/or 404 as a mirror image of detection points 302 and/or 402. In other words, the computing system 110 may determine if points 304 and/or 404 are ghost targets based on analyzing paths radar signals may take when traveling from the transmit antenna(s) 202 toward an object corresponding to points 302, 402 and returning to the receive antenna(s) 204 along an indirect path that includes reflecting off of a reflecting surface corresponding to clusters 306, 406. Accordingly, the target determination system 112, the computing system 110, or a combination thereof may determine that points 304, 404 correspond to a false target based on determining that points 304, 404 are ghost targets of points 302, 402.

As discussed herein, the target determination system 112 can generate the target determination of the radar sensor system 104 based on detection points in a radar frame corresponding to moving object(s) in the environment. By way of example, the radar sensor system 104, the computing system 110, or a combination thereof can determine relative velocity values of clusters 306, 406 relative to the radar sensor system 104; generate an ego motion estimation of the radar sensor system 104; and normalize the relative velocity values to the ego motion estimation to form absolute velocity values of the clusters 306, 406. Accordingly, the computing system 110 can use these absolute velocity values when performing a reflection analysis, for example, to verify that the clusters 306, 406 actually correspond to the static object that is apparently co-located with the clusters 306, 406 based on the map data. Further, the absolute velocity values may be provided to the target determination system 112. By way of example, the target determination system 112 can identify that clusters 306, 406 have absolute velocity values of zero or approximately zero and thereby likely correspond to static object(s) in the environment. In this example, clusters 306, 406 can be excluded from the target determination system 112 when generating the target determination.

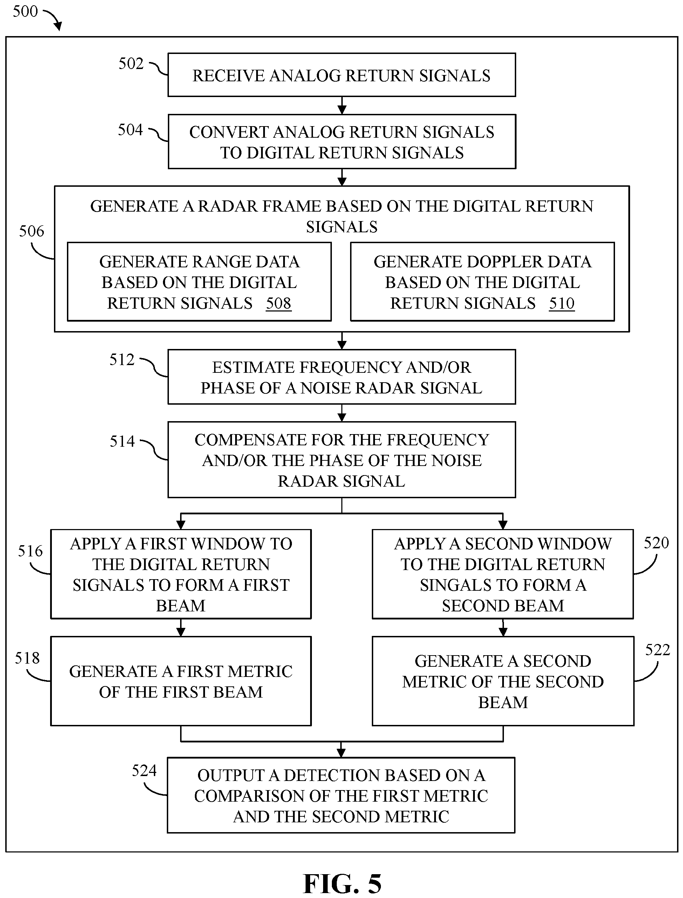

Turning to Fig. 5, illustrated is an exemplary algorithm 500 that can be performed by the radar sensor system 104. At 502, analog return signals are received (e.g., by the receive antennas 204). At 504, the analog return signals are converted to digital return signals (e.g., by an ADC of the radar sensor system 104). At 506, a radar frame is generated (e.g., by frame generation component 208) based on the digital return signals. At 508, range data is generated (e.g., by FFT) based on the digital return signals. At 510, Doppler data is generated (e.g., by FFT) based on the digital return signals. At 512, frequency and/or phase of a noise radar signal are estimated, where the noise radar signal may be a noisy component of the analog and/or digital return signals or the noise radar signal may be a radar signal generated by a second radar sensor system, for example, belonging to a different autonomous vehicle. At 514, the frequency and/or the phase of the noise radar signal are compensated, for example, such that the noise radar signal does not impact the range data, the Doppler data, or a target determination. It is contemplated that acts 504-514 can be performed by the computing system 110, the radar sensor system 104, the target determination system 112, or a combination thereof. At 516, a first window is applied on beamforming (e.g., by windowing component 210) to the digital return signals to form a first beam (i.e., a first windowed signal). At 518, a first metric of the first beam is generated. At 520, a first window is applied on the beamforming (e.g., by windowing component 210) to the digital return signals to form a second beam (i.e., a second windowed signal). At 522, a second metric of the second beam is generated. At 524, a detection (i.e., an indication of a true target) is outputted based on a comparison (e.g., by the comparison component 212) of the first metric and the second metric. It is contemplated that acts 516-524 can be performed by the computing system 110, the radar sensor system 104, the target determination system 112, the windowing component 210, the comparison component, or a combination thereof.

According to an example, some or all of acts 516-524 can be performed a predetermined number of times, for example, such that a third window is applied to the digital return signal to form a third beam, a third metric of the third beam is generated, and a detection is outputted based on a comparison of any combination of the first metric, the second metric, and the third metric. Pursuant to another example, some or all of the acts 516-524 can be performed (e.g., such that the third metric is generated and the detection is outputted based on the comparison of any combination of the first metric, the second metric, and the third metric) until reaching a preset confidence interval with respect to a target determination.

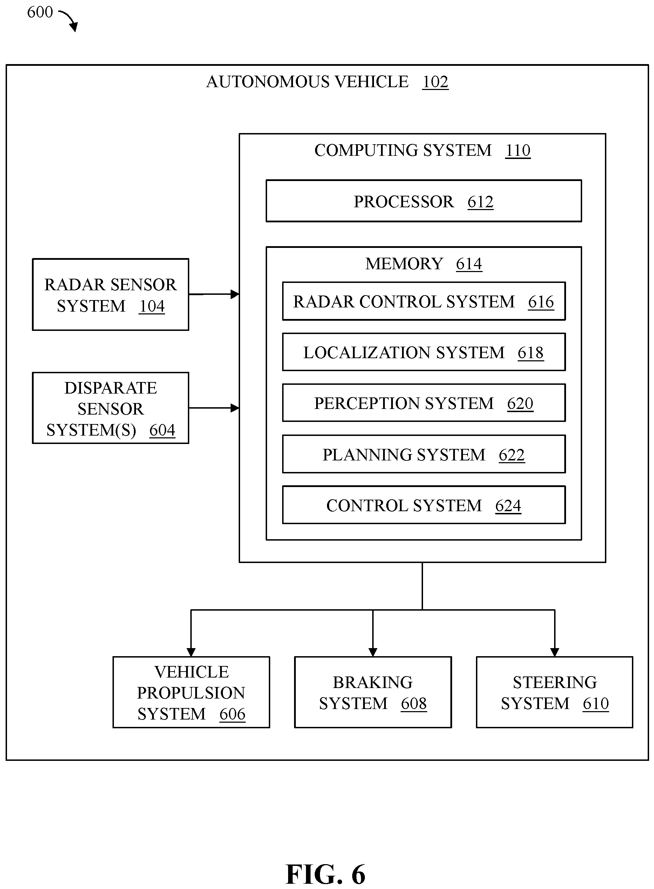

Turning to Fig. 6, illustrated is an autonomous vehicle 102 according to various embodiments. The autonomous vehicle 102 can navigate about roadways without human conduction based upon sensor signals outputted by sensor systems of the autonomous vehicle 102. The autonomous vehicle 102 includes a plurality of sensor systems. More particularly, the autonomous vehicle 102 includes a radar sensor system 104 (e.g., which can include the target determination system 112). The autonomous vehicle 102 can further include one or more disparate sensor systems 604. The disparate sensor systems 604 can include GPS system(s), ultrasonic sensor(s), infrared system(s), camera system(s), lidar system(s), additional radar sensor system(s), and the like. The sensor systems 104 and 604 can be arranged about the autonomous vehicle 102.

The autonomous vehicle 102 further includes several mechanical systems (e.g., the mechanical system 108) that are used to effectuate appropriate motion of the autonomous vehicle 102. For instance, the mechanical systems can include, but are not limited to, a vehicle propulsion system 606, a braking system 608, and a steering system 610. The vehicle propulsion system 606 may be an electric engine or a combustion engine. The braking system 608 can include an engine brake, brake pads, actuators, and/or any other suitable componentry that is configured to assist in decelerating the autonomous vehicle 102. The steering system 610 includes suitable componentry that is configured to control the direction of movement of the autonomous vehicle 102.

The autonomous vehicle 102 additionally includes the computing system 110 that is in communication with the sensor systems 104 and 604, the vehicle propulsion system 606, the braking system 608, and the steering system 610. The computing system 110 includes a processor 612 and memory 614; the memory 614 includes computer-executable instructions that are executed by the processor 612. Pursuant to various examples, the processor 612 can be or include a graphics processing unit (GPU), a plurality of GPUs, a central processing unit (CPU), a plurality of CPUs, an application-specific integrated circuit (ASIC), a digital signal processor (DSP), a microcontroller, a programmable logic controller (PLC), a field programmable gate array (FPGA), or the like.

The memory 614 of the computing system 110 can include a radar control system 616, a localization system 618, a perception system 620, a planning system 622, and a control system 624. The radar control system 616 is configured to control the radar sensor system 104. For example, the radar control system 616 can control windows and/or windowed signals defined by the windowing component 210 of the target determination system 112, compared by the comparison component 212 of the target determination system 112, and/or considered when generating a target determination. The localization system 618 can be configured to determine a local position of the autonomous vehicle 102. The perception system 620 can be configured to perceive objects nearby the autonomous vehicle 102 (e.g., based on outputs from the sensor systems 104 and 604). For instance, the perception system 620 can detect, classify, and predict behaviors of objects nearby the autonomous vehicle 102. The perception system 620 (and/or differing system(s) included in the memory 614) can track the objects nearby the autonomous vehicle 102 and/or make predictions with respect to the environment in which the autonomous vehicle 102 is operating (e.g., predict the behaviors of the objects nearby the autonomous vehicle 102). The localization system 618 and/or the perception system 620 can provide information corresponding to an environment of the radar sensor system 104 to the target determination system 112. Accordingly, the target determination system 112 can generate a target determination based on the information corresponding to the environment. For example, the information may indicate the location of an object in the environment. The object may be a static object and its location may be stored in map data stored in the memory 614, such as in the localization system 618. Further, the map data may indicate that the object comprises a reflective surface. Accordingly, the location and/or a characteristic of the reflective surface may be stored in the map data. The map data can be accessed by the localization system 618. The map data can be provided to the radar sensor system 104 and/or the computing system 110 such that a target determination can be generated based on the map data. In embodiments, the disparate sensor system 604 can include a camera sensor system that generates an image signal that includes an object having a reflecting surface in an environment of the radar sensor system 104. The image signal can be provided to the radar sensor system 104 and/or the computing system 110, wherein the reflecting surface can be analyzed, for example, to determine if the reflecting surface could have generated a return signal received by the radar sensor system 104. Accordingly, the target determination can be based on the analysis of the reflecting surface. Moreover, the planning system 622 can plan motion of the autonomous vehicle 102. Further, the control system 624 can be configured to control at least one of the mechanical systems of the autonomous vehicle 102 (e.g., at least one of the vehicle propulsion system 606, the braking system 608, and/or the steering system 610).

An operation of the autonomous vehicle 102 can be controlled by the computing system 110 based at least in part on the target determination outputted by the radar sensor system 104 and/or the computing system 110. While the radar sensor system 104 is described as being included as part of the autonomous vehicle 102 in Fig. 6, it is contemplated that the radar sensor system 104 can be utilized in other types of scenarios (e.g., included in other types of systems, etc.). Moreover, in other embodiments, it is contemplated that the radar sensor system 104 can include the radar control system 616 (e.g., the radar processing circuitry 206 can include the radar control system 616).

The computing system 110 can comprise the processor 612. The computing system can comprise the memory 614. The memory 614 can store instructions that, when executed by the processor 612, cause the processor 612 to perform acts. The acts can include generating a radar frame. The radar frame can comprise one or more detection points based on a return signal. The acts can include applying a first window to the return signal to form a first windowed signal. The acts can include applying a second window different from the first window to the return signal to form a second windowed signal. The acts can include determining if the detection point corresponds to a true target based on a comparison of the first windowed signal and the second windowed signal. The acts can include outputting an indication that the detection point corresponds to a true target. The acts can include controlling a mechanical system of the autonomous vehicle 102 based on the indication. The acts can include any combination of acts described herein, such as the acts described in this paragraph.

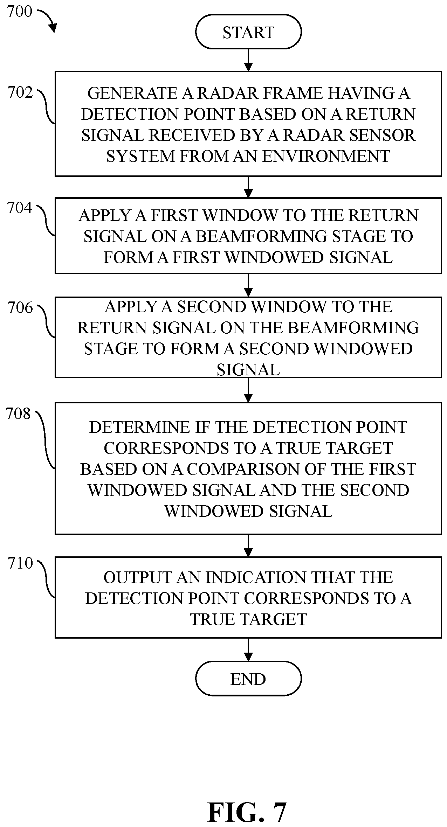

Fig. 7 illustrates an exemplary methodology relating to determining if a detection point from a radar sensor system corresponds to a true target. While the methodology is shown and described as being a series of acts that are performed in a sequence, it is to be understood and appreciated that the methodology is not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodologies can be stored in a computer-readable medium, displayed on a display device, and/or the like.

Fig. 7 illustrates a methodology 700 of determining if a detection point from a radar sensor system corresponds to a true target. At 702, a radar frame can be generated based on a return signal received by a radar sensor system from an environment. The return signal can be received responsive to a radar signal transmitted into the environment by the radar sensor system. Moreover, the radar frame can include one or more detection points, where each of the detection points has a velocity value, an azimuth angle value, an elevation angle value, a magnitude, a distance, or a combination thereof. At 704, a first window can be applied to the return signal to form a first windowed signal. At 706, a second window can be applied to the return signal to form a second windowed signal. At 708, it can be determined if the detection point corresponds to a true target based on a comparison of the first windowed signal and the second windowed signal. The act 708 can further include determining if the detection point corresponds to a true target based on a characteristic of the environment. The act 708 can further include generating range data, Doppler data, or a combination thereof based on the return signal and determining if the detection point corresponds to a true target based on the range data, Doppler data, or the combination thereof. The act 708 can further include determining a relative velocity of the detection point relative to the radar sensor system; generating an ego motion estimation of the radar sensor system; normalizing the relative velocity value of the detection point to the ego motion estimation to form an absolute velocity value of the detection point; and determining if the detection point corresponds to a true target based on the absolute velocity value of the detection point. At 710, an indication that the detection point corresponds to a true target can be outputted. Further, the act 710 can include outputting an indication that the detection point corresponds to a false target. The radar sensor system can be in communication with an autonomous vehicle. The indication can be communicated to the autonomous vehicle. A mechanical system of the autonomous vehicle can be controlled based on the indication.

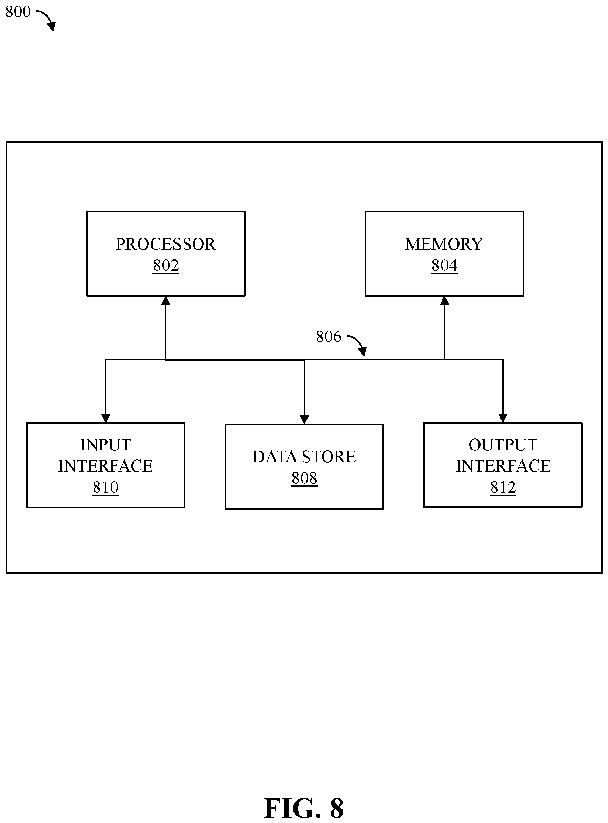

Referring now to Fig. 8, a high-level illustration of an exemplary computing device 800 that can be used in accordance with the systems and methodologies disclosed herein is illustrated. For instance, the computing device 800 may be or include the computing system 110. According to another example, the computing device 800 may be or include the radar processing circuitry 206. The computing device 800 includes at least one processor 802 that executes instructions that are stored in a memory 804. The instructions may be, for instance, instructions for implementing functionality described as being carried out by one or more systems discussed above or instructions for implementing one or more of the methods described above. The processor 802 may be a GPU, a plurality of GPUs, a CPU, a plurality of CPUs, a multi-core processor, etc. The processor 802 may access the memory 804 by way of a system bus 806. In addition to storing executable instructions, the memory 804 may also store radar data, detection points, target determinations, map data, and so forth.

The computing device 800 additionally includes a data store 808 that is accessible by the processor 802 by way of the system bus 806. The data store 808 may include executable instructions, radar data, detection points, target determinations, etc. The computing device 800 also includes an input interface 810 that allows external devices to communicate with the computing device 800. For instance, the input interface 810 may be used to receive instructions from an external computer device, etc. The computing device 800 also includes an output interface 812 that interfaces the computing device 800 with one or more external devices. For example, the computing device 800 may transmit control signals to the vehicle propulsion system 606, the braking system 608, and/or the steering system 610 by way of the output interface 812.

Additionally, while illustrated as a single system, it is to be understood that the computing device 800 may be a distributed system. Thus, for instance, several devices may be in communication by way of a network connection and may collectively perform tasks described as being performed by the computing device 800.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

Systems and methods have been described herein in accordance with at least the examples set forth below.

(A1) In one aspect, a radar sensor system is described herein. The radar sensor system includes at least one transmit antenna configured to transmit a radar signal into an environment of the radar sensor system, at least one receive antenna configured to receive a return signal from the environment of the radar sensor system responsive to the radar signal, and radar processing circuitry that is configured to perform acts. The acts include generating a radar frame having a detection point based on the return signal. The acts further include applying a first window to the return signal on a beamforming stage to form a first windowed signal. Moreover, the acts include applying a second window different from the first window to the return signal on the beamforming stage to form a second windowed signal. The acts also include determining if the detection point corresponds to a true target based on a comparison of the first windowed signal and the second windowed signal. Further, the acts include outputting an indication that the detection point corresponds to a true target.

(A2) In some embodiments of the radar sensor system of (A1), the acts further include determining if the detection point corresponds to a true target based on a characteristic of the environment.

(A3) In some embodiments of the radar sensor system of (A2), the characteristic of the environment includes a location of a reflective surface in map data of the environment of the radar sensor system.

(A4) In some embodiments of at least one of the radar sensor systems of (A1)-(A3), the at least one transmit antenna is further configured to transmit a second radar signal into the environment of the radar sensor system, and the at least one receive antenna is further configured to receive a second return signal from the environment of the radar sensor system responsive to the second radar signal. Moreover, the acts further include generating the radar frame having a second detection point based on the second return signal. Further, forming the first windowed signal includes applying a first weight of the first window to the first return signal and applying a second weight of the first window to the second return signal. Moreover, forming the second windowed signal includes applying a third weight of the second window to the first return signal and applying a fourth weight of the second window to the second return signal. At least one of the third weight is different from the first weight or the fourth weight is different from the second weight.

(A5) In some embodiments of at least one of the radar sensor systems of (A1)-(A4), the acts further include generating at least one of range data or Doppler data based on the return signal, and determining if the detection point corresponds to a true target based on the at least one of the range data or the Doppler data.

(A6) In some embodiments of at least one of the radar sensor systems of (A1)-(A5), the acts further include generating a first metric based on the first windowed signal; generating a second metric based on the second windowed signal; and determining if the detection point corresponds to a true target based on a comparison of the first metric and the second metric.

(A7) In some embodiments of the radar sensor system of (A6), the acts further include determining the second window based on the first metric.

(A8) In some embodiments of at least one of the radar sensor systems of (A6)-(A7), each of the first metric and the second metric comprise a plurality of parameters having a plurality of parameter weights.

(A9) In some embodiments of at least one of the radar sensor systems of (A6)-(A8), the first metric includes at least one of a first elevation angle, a first azimuth angle, or a first magnitude of the detection point based on the first windowed signal, and the second metric includes at least one of a second elevation, a second azimuth angle, or a second magnitude of the detection point based on the second windowed signal.

(A10) In some embodiments of at least one of the radar sensor systems of (A6)-(A9), the radar frame includes a plurality of detection points, and the acts further include clustering a portion of the detection points to form an evaluated obj ect.

(A11) In some embodiments of the radar sensor system of (A10), the first metric and the second metric each include at least one of: a quantity of the detection points corresponding to the evaluated object; a density of the detection points corresponding to the evaluated object; a size of the evaluated object; a geometry of the evaluated object; a stability of angles of the detection points of the evaluated object based on the first windowed signal relative to angles of the detection points of the evaluated object based on the second windowed signal; or a stability of amplitudes of portions of the first windowed signal corresponding to the detection points of the evaluated object relative to amplitudes of portions of the second windowed signal corresponding to the detection points of the evaluated object.

(A12) In some embodiments of at least one of the radar sensor systems of (A10)-(A11), the acts further include clustering a second portion of the detection points to form a second evaluated object; and determining if the detection point corresponds to a true target based on a comparison of at least one of an angle or a Doppler of the first evaluated object and of at least one of an angle or a Doppler of the second evaluated object.

(A13) In some embodiments of at least one of the radar sensor systems of (A1)-(A12), the acts further include determining a relative velocity of the detection point relative to the radar sensor system; generating an ego motion estimation of the radar sensor system; normalizing the relative velocity value of the detection point to the ego motion estimation to form an absolute velocity value of the detection point; and determining if the detection point corresponds to a true target based on the absolute velocity value of the detection point.

(A14) In some embodiments of at least one of the radar sensor systems of (A1)-(A13), the radar sensor system is in communication with an autonomous vehicle, and the acts further include causing a mechanical system of the autonomous vehicle to be controlled based upon the indication.

(B1) In another aspect, a method of determining if a detection point from a radar sensor system corresponds to a true target is described herein. The method includes generating a radar frame comprising the detection point based on a return signal received by the radar sensor system from an environment of the radar sensor system, the return signal being received responsive to a radar signal transmitted into the environment by the radar sensor system. Moreover, the method includes applying a first window to the return signal on a beamforming stage to form a first windowed signal. The method further includes applying a second window different from the first window to the return signal on the beamforming stage to form a second windowed signal. The method also includes determining if the detection point corresponds to a true target based on a comparison of the first windowed signal and the second windowed signal. Moreover, the method includes outputting an indication that the detection point corresponds to a true target.

(B2) In some embodiments of the method of (B 1), the method further includes determining if the detection point corresponds to a true target based on a characteristic of the environment.

(B3) In some embodiments of at least one of the methods of (B 1)-(B2), the method further includes generating at least one of range data or Doppler data based on the return signal, and determining if the detection point corresponds to a true target based on the at least one of the range data or the Doppler data.

(B4) In some embodiments of at least one of the methods of (B 1)-(B3), the method further includes determining a relative velocity of the detection point relative to the radar sensor system; generating an ego motion estimation of the radar sensor system; normalizing the relative velocity value of the detection point to the ego motion estimation to form an absolute velocity value of the detection point; and determining if the detection point corresponds to a true target based on the absolute velocity value of the detection point.

(B5) In some embodiments of at least one of the methods of (B1)-(B4), the radar sensor system is in communication with an autonomous vehicle, and the method further includes controlling a mechanical system of the autonomous vehicle based on the indication.

(C1) In another aspect, an autonomous vehicle is described herein. The autonomous vehicle includes a mechanical system, a radar sensor system, and a computing system. The radar sensor system includes a transmit antenna configured to transmit a radar signal into an environment of the radar sensor system, and a receive antenna configured to receive a return signal from the environment of the radar sensor system responsive to the radar signal. The computing system includes a processor and memory that stores instructions that, when executed by the processor, cause the processor to perform acts. The acts include generating a radar frame comprising a detection point based on the return signal. The acts further include applying a first window to the return signal on a beamforming stage to form a first windowed signal. Moreover, the acts include applying a second window different from the first window to the return signal on the beamforming stage to form a second windowed signal. The acts also include determining if the detection point corresponds to a true target based on a comparison of the first windowed signal and the second windowed signal. Further, the acts include outputting an indication that the detection point corresponds to a true target. The acts also include controlling the mechanical system of the autonomous vehicle based on the indication.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims. Furthermore, to the extent that the term "includes" is used in either the details description or the claims, such term is intended to be inclusive in a manner similar to the term "comprising" as "comprising" is interpreted when employed as a transitional word in a claim.

## Claims

1. A radar sensor system, comprising:
at least one transmit antenna configured to transmit a radar signal into an environment of the radar sensor system;
at least one receive antenna configured to receive a return signal from the environment of the radar sensor system responsive to the radar signal; and
radar processing circuitry that is configured to perform acts comprising:
generating a radar frame having a detection point based on the return signal;
applying a first window to the return signal on a beamforming stage to form a first windowed signal;
applying a second window different from the first window to the return signal on the beamforming stage to form a second windowed signal;
determining if the detection point corresponds to a true target based on a comparison of the first windowed signal and the second windowed signal; and
outputting an indication that the detection point corresponds to a true target.

2. The radar sensor system of claim 1, the acts further comprising determining if the detection point corresponds to a true target based on a characteristic of the environment.

3. The radar sensor system of claim 2, wherein the characteristic of the environment comprises a location of a reflective surface in map data of the environment of the radar sensor system.

4. The radar sensor system of any one of claims 1-3, wherein:
the at least one transmit antenna is further configured to transmit a second radar signal into the environment of the radar sensor system; and
the at least one receive antenna is further configured to receive a second return signal from the environment of the radar sensor system responsive to the second radar signal;
the acts further comprising:
generating the radar frame having a second detection point based on the second return signal;
wherein:
forming the first windowed signal includes applying a first weight of the first window to the first return signal and applying a second weight of the first window to the second return signal;
forming the second windowed signal includes applying a third weight of the second window to the first return signal and applying a fourth weight of the second window to the second return signal; and
at least one of the third weight is different from the first weight or the fourth weight is different from the second weight.

5. The radar sensor system of any one of claims 1-4, the acts further comprising generating at least one of range data or Doppler data based on the return signal, and determining if the detection point corresponds to a true target based on the at least one of the range data or the Doppler data.

6. The radar sensor system of any one of claims 1-5, the acts further comprising:
generating a first metric based on the first windowed signal;
generating a second metric based on the second windowed signal; and
determining if the detection point corresponds to a true target based on a comparison of the first metric and the second metric.

7. The radar sensor system of claim 6, the acts further comprising determining the second window based on the first metric.

8. The radar sensor system of any one of claims 6-7, wherein each of the first metric and the second metric comprise a plurality of parameters having a plurality of parameter weights.

9. The radar sensor system of any one of claims 6-8, wherein:
the first metric includes at least one of a first elevation angle, a first azimuth angle, or a first magnitude of the detection point based on the first windowed signal, and
the second metric includes at least one of a second elevation, a second azimuth angle, or a second magnitude of the detection point based on the second windowed signal.

10. The radar sensor system of any one of claims 6-9, wherein the radar frame includes a plurality of detection points, the acts further comprising clustering a portion of the detection points to form an evaluated object.

11. The radar sensor system of claim 10, wherein the first metric and the second metric each include at least one of:
a quantity of the detection points corresponding to the evaluated object;
a density of the detection points corresponding to the evaluated object;
a size of the evaluated object;
a geometry of the evaluated object;
a stability of angles of the detection points of the evaluated object based on the first windowed signal relative to angles of the detection points of the evaluated object based on the second windowed signal; or
a stability of amplitudes of portions of the first windowed signal corresponding to the detection points of the evaluated object relative to amplitudes of portions of the second windowed signal corresponding to the detection points of the evaluated object.

12. The radar sensor system of any one of claims 10-11, the acts further comprising:
clustering a second portion of the detection points to form a second evaluated object; and
determining if the detection point corresponds to a true target based on a comparison of at least one of an angle or a Doppler of the first evaluated object and of at least one of an angle or a Doppler of the second evaluated object.

13. The radar sensor system of any one of claims 1-12, the acts further comprising:
determining a relative velocity of the detection point relative to the radar sensor system;
generating an ego motion estimation of the radar sensor system;
normalizing the relative velocity value of the detection point to the ego motion estimation to form an absolute velocity value of the detection point; and
determining if the detection point corresponds to a true target based on the absolute velocity value of the detection point.

14. A method of determining if a detection point from a radar sensor system corresponds to a true target, the method comprising:
generating a radar frame comprising the detection point based on a return signal received by the radar sensor system from an environment of the radar sensor system, the return signal being received responsive to a radar signal transmitted into the environment by the radar sensor system;
applying a first window to the return signal on a beamforming stage to form a first windowed signal;
applying a second window different from the first window to the return signal on the beamforming stage to form a second windowed signal;
determining if the detection point corresponds to a true target based on a comparison of the first windowed signal and the second windowed signal; and
outputting an indication that the detection point corresponds to a true target.

15. The method of claim 14, further comprising:
determining a relative velocity of the detection point relative to the radar sensor system;
generating an ego motion estimation of the radar sensor system;
normalizing the relative velocity value of the detection point to the ego motion estimation to form an absolute velocity value of the detection point; and
determining if the detection point corresponds to a true target based on the absolute velocity value of the detection point.
